# EUROPEAN PATENT SPECIFICATION

(11) **EP 1 098 497 B1**
(45) Date of publication and mention of the grant of the patent: **13.12.2006**
(21) Application number: 00123157.0
(22) Date of filing: 25.10.2000
(51) Int. Cl.: H04M 1/02, H04M 1/20

(54) **Acoustic echo suppression mechanism for a portable radio apparatus**
Mechanismus zur akustischen Echounterdrückung für ein Funkgerät
Mécanisme de suppression d'écho acoustique pour un appareil radio portable

(30) Priority: 26.10.1999 JP 30459699
(43) Date of publication of application: 09.05.2001
(73) Proprietor: MATSUSHITA ELECTRIC INDUSTRIAL CO., LTD., Kadoma-shi, Osaka (JP)
(72) Inventor: Kitamura, Toshiyasu, Yokohama-shi, Kanagawa 245-0052 (JP); Yamamoto, Kouichi, Yokohama-shi, Kanagawa 223-0051 (JP); Osato, Takashi, Yokohama-shi, Kanagawa 223-0054 (JP); Ono, Hideo, Yokohama-shi, Kanagawa 224-0003 (JP)
(74) Representative: Grünecker, Kinkeldey, Stockmair & Schwanhäusser Anwaltssozietät

(56) References cited:
- DE-A- 19 802 552
- US-A- 4 675 903
- US-A- 5 716 730
- US-A- 5 883 966

## Description

The present invention relates to a portable radio apparatus according to claim 1 and a portable radio apparatus according to claim 2.

DE 198 02 552 discloses a portable radio apparatus comprising a body including a cover and a case. A printed circuit board is provided between the cover and the case. An I/O connector is provided on the printed board and sandwiched between the cover and the case. A recess portion is provided on at least one of a side of the I/O connector facing the cover and a side of the I/O connector facing the case. A rib is provided on the case at the portion corresponding to the recess in order to be received by the recess.

US 4,675,903 discloses a telephone handset assembly. Bevels serve to acoustically isolate the interior of the speaker portion from the interior of the microphone portion of the handset. The isolation minimises acoustic feedback from the speaker to the microphone.

US 5,716,730 discloses a battery case mounting structure for electronic equipment. Said document describes a telephone body, a lock mechanism to lock batteries and a rib.

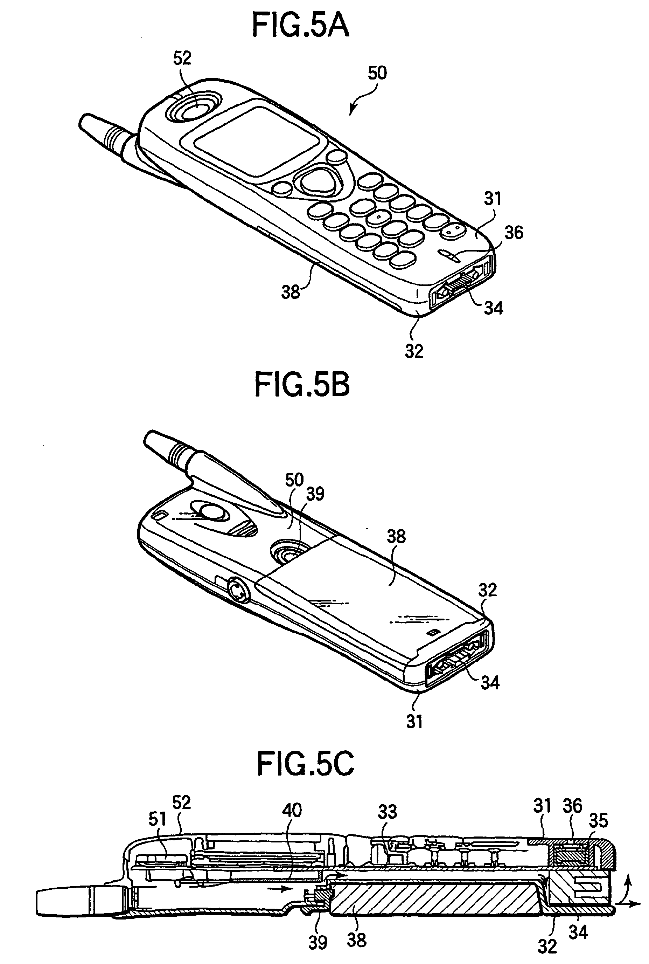

Fig. 5A shows a perspective view of conventional portable radio apparatus with the operation panel facing upward. Fig. 5B shows a perspective view of conventional portable radio apparatus with the back side facing upward. Fig. 5C shows a sectional view of conventional portable radio apparatus. As shown in Fig. 5A, a main unit body 50 is equipped with an earpiece 52 for a receiver (speaker) 51 and a mouthpiece 36 for a microphone 35 on the operation side and an I/O connector 34 on the end. The receiver 51 transmits received sounds from the earpiece 52 to outside the main unit body 50. The receiver 51, as shown in the sectional view of Fig. 5C, is provided on a printed circuit board 33 in the main unit body 50, thus causing part of received sounds to be propagated in the space in the main unit body 50.

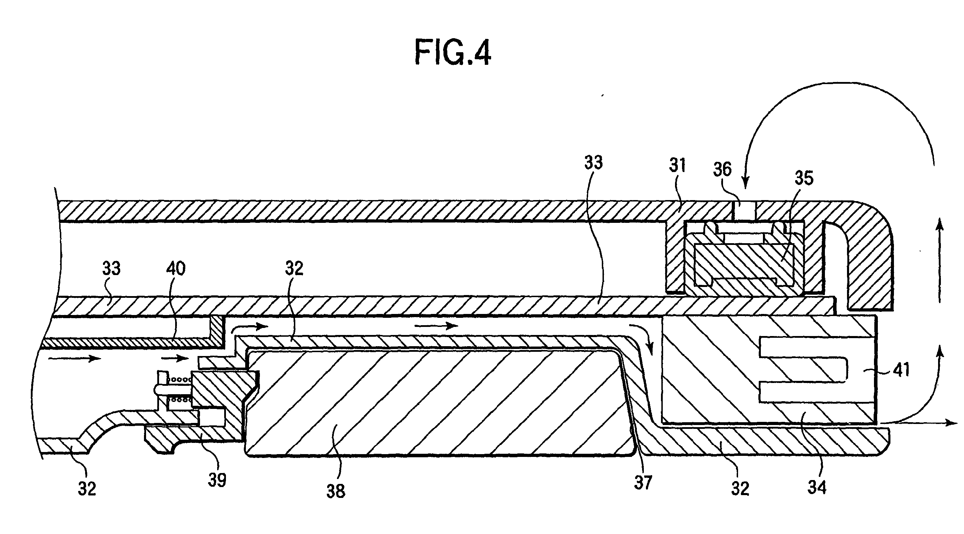

More specifically, as shown in Fig. 4, in portable radio apparatus whose body is composed of a cover 31 and a case 32, an I/O connector 34 provided on a printed circuit board 33 is sandwiched between the cover 31 and the case 32, wherein the side of the I/O connector 34 facing the case 32 and the side of the I/O connector 34 facing the cover 31 are provided with gaps parallel with the external terminal 41 of the I/O connector, through which gaps received sounds are leaked from the receiver and reach the transmitter (microphone) 35 to generate echoes, thereby inviting degradation of speech quality.

Conventionally, as shown in Fig. 4, in portable radio apparatus whose body is composed of a cover and a case 32, the portable radio apparatus adapted to comprise a battery hook 39 to lock batteries 38 when the batteries 38 are being received in a battery receiver 37 provided in the case 32, wherein there are gaps between the battery hook 39 and the case 32 and between the battery hook 39 and the shielding case 40, through which gaps received sounds are leaked from the receiver and reach the transmitter (microphone) 35 to generate echoes, thereby inviting degradation of speech quality.

The invention solves the aforementioned conventional problems and aims at providing an echo suppression mechanism equipped with ribs for interrupting received sounds propagated via space in an body from a receiver in order to prevent echoes.

The above and other objects of the invention are achieved by a portable radio apparatus according to claim 1 and a portable radio apparatus according to claim 2.

Via the configuration of claim 1, the space between the I/O connector and the case can be made into refracted space in order to interrupt received sounds propagated from a receiver via space in a body, thereby preventing echoes.

Via the configuration of claim 2, it is possible to interrupt received sounds propagated from a receiver via space in a body, thereby preventing echoes.

Another aspect of the invention is portable radio apparatus comprising an echo suppression mechanism according to any one of the first through second claims of the invention.

Because the portable radio apparatus comprises an echo suppression mechanism according to any one of the first through second claims of the invention, it is possible to provide portable radio apparatus capable of suppressing echoes.
Fig. 1 is a cross-sectional view of portable radio apparatus showing a configuration of an echo suppression mechanism according to the embodiment of the invention.
Fig. 2 is a cross-sectional view of portable radio apparatus showing another configuration of an echo suppression mechanism according to the embodiment of the invention.
Fig. 3 is a cross-sectional view of portable radio apparatus showing another configuration of an echo suppression mechanism according to the embodiment of the invention.
Fig. 4 is a cross-sectional view of portable radio apparatus showing the configuration of a conventional echo suppression mechanism.
Figs. 5A, 5B and 5C show a perspective view and a sectional view of conventional portable radio apparatus.

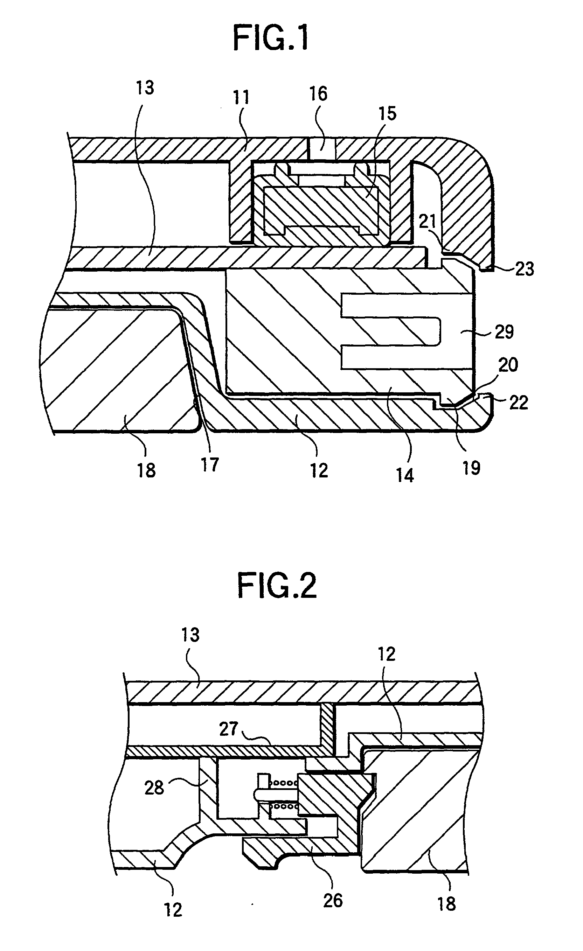

Embodiments of the invention will be explained with reference to Figs. 1 and 2.

Fig. 1 is a cross-sectional view of portable radio apparatus showing a configuration of an echo suppression mechanism according to the embodiment of the invention.

Referring to Fig. 1, the body of portable radio apparatus is composed of a cover 11 and a case 12, and an I/O connector 14 provided on a printed circuit board 13 is sandwiched between the cover 11 and the case 12. Onto the cover 11 is attached a transmitter (microphone) 15 provided on the printed circuit board 13 and the cover 11 is provided with a mouthpiece 16. The case 12 is provided with a battery receiver 17 for receiving batteries 18.

Fig. 1 differs from the conventional configuration in Fig. 4 in that the side of the I/O connector 14 facing the case 12 and the side of the I/O connector 14 facing the cover 11 are provided with ribs 19 and the case 12 and the cover 11 are provided with recesses 20, 21 to receive the ribs and further the side of the case 12 facing the external terminal 29 of the I/O connector and the side of the cover 11 facing the external terminal 29 of the I/O connector are provided with ribs 22, 23.

As a result, received sounds leaked from the receiver via a gap in the body of the portable radio apparatus are interrupted by the rib 19 on the side of the I/O connector facing the case 12. In case received sounds are not perfectly interrupted, the rib 23 provided on the cover 11 can interrupt received sounds leaked from the I/O connector 14, thereby preventing echoes.

Fig. 2 is a cross-sectional view of portable radio apparatus showing another configuration of an echo suppression mechanism according to the embodiment of the invention.

Referring to Fig. 2, the body of portable radio apparatus is composed of a cover 11 and a case 12, and comprises a battery hook 26 to lock batteries 18 when the batteries 18 are being received in a battery receiver 17 provided in the case 12. Fig. 2 differs from the conventional configuration in Fig. 4 in that the part of the case at the receiver side of the battery hook 26 is provided with a rib 28. In Fig. 2, the rib 28 extends to the shield case 27.

Via the rib 28, it is possible to interrupt received sounds coming from a receiver and reaching a transmitter (microphone) 15 via space within a body, thereby preventing echoes.

While not shown, portable radio apparatus equipped with echo suppression mechanisms in Fig. 1 and Fig. 2 will further prevent echoes.

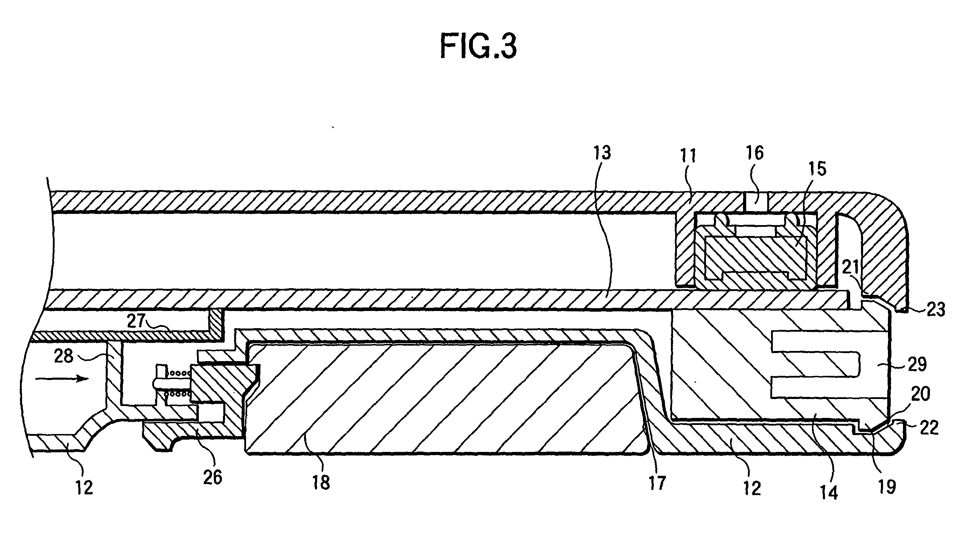

Fig. 3 is a cross-sectional view of portable radio apparatus simultaneously employing the aspects of the invention of Figs. 1 and 2. As shown on the left of Fig. 3, received sounds propagated from a receiver (speaker) which is not shown are interrupted by the rib 28. In case received sounds are not perfectly interrupted or there are received sounds propagated via some space in a body, receiving signals trying to slip beside the I/O connector 14 are interrupted by the rib 19 and the recess or by the rib and the I/O connector 14, as shown on the right of Fig. 3.

As explained earlier, the first aspect of the invention is, in portable radio apparatus whose body is composed of a cover and a case, an I/O connector provided on a printed circuit board is sandwiched between the cover and the case, an echo suppression mechanism characterized in that the side of the I/O connector facing the case and the side of the I/O connector facing the cover are provided with ribs and the case and the cover are provided with recesses to receive the ribs in order to interrupt received sounds coming from a receiver and reaching a transmitter via space within the body, thereby preventing echoes.

This configuration has an advantage that the space between the I/O connector and the case can be made into refracted space in order to interrupt received sounds propagated from a receiver via space within a body, thereby preventing echoes.

The second aspect of the invention is, in portable radio apparatus whose body is composed of a cover and a case, an I/O connector provided on a printed circuit board is sandwiched between the cover and the case, an echo suppression mechanism characterized in that the side of the case facing the external terminal of the I/O connector and the side of the cover facing the external terminal of the I/O connector are provided with ribs in order to interrupt received sounds coming from a receiver and reaching a transmitter via space within the body, thereby preventing echoes. This configuration has an advantage that the space between the I/O connector and the case can be made into refracted space in order to interrupt received sounds propagated from a receiver via space within a body, thereby preventing echoes.

The third aspect of the invention is, in portable radio apparatus whose body is composed of a cover and a case, an I/O connector provided on a printed circuit board is sandwiched between the cover and the case, an echo suppression mechanism characterized in that the side of the I/O connector facing the case and the side of the I/O connector facing the cover are provided with ribs and the case and the cover are provided with recesses to receive the ribs and further the side of the case facing the external terminal of the I/O connector and the side of the cover facing the external terminal of the I/O connector are provided with ribs in order to interrupt received sounds coming from a receiver and reaching a transmitter via space in the body, thereby preventing echoes. This configuration has an advantage of interrupting received sounds propagated from a receiver via space in a body, thereby preventing echoes.

The fourth aspect of the invention is, in portable radio apparatus whose body is composed of a cover and a case, the portable radio apparatus adapted to comprise a battery hook to lock batteries when the batteries are being received in a battery receiver provided in the case, an echo suppression mechanism characterized in that the part of the case at the receiver side of the battery hook is provided with a rib in order to interrupt received sounds coming from a receiver and reaching a transmitter via space in the body, thereby preventing echoes. This configuration has an advantage of interrupting received sounds propagated from a receiver via space in a body, thereby preventing echoes.

The fifth aspect of the invention is portable radio apparatus comprising an echo suppression mechanism according to any one of the first through fourth aspects of the invention. Because the portable radio apparatus comprises an echo suppression mechanism according to any one of the first through fourth aspects of the invention, this configuration has an advantage of providing portable radio apparatus capable of suppressing echoes.

## Claims

1. A portable radio apparatus comprising:
a body including a cover (11) and a case (12);
a printed board (13) provided between the cover (11) and the case (12);
an I/O connector (14) provided on the printed board (13) and sandwiched between the cover (11) and the case (12); **characterised by**
at least a first rib (19) provided on at least one of a side of the I/O connector (14) facing the cover (11) and a side of the I/O connector facing the case (12)
at least a recess portion (20) provided on the case (12) at a portion corresponding to the first rib (19) in order to receive the first rib (19); and
at least a second rib(22,23) provided on at least one of a side of the I/O connector (14) facing the case (12) and a side of the cover (11) facing an external terminal (29) of the I/O connector (14).

2. A portable radio apparatus comprising:
a body including a cover (11) and a case (12);
a receiver provided in the body;
a battery hook (26) provided in the case (12) to lock batteries (18); **characterised by**
a rib (28) provided on a part of the case (12) at a receiver side of the battery hook (26), and extending to a shield case (27) so that the rib is arranged between the receiver and the battery hook such that received sounds coming from a receiver and reaching a transmitter via space in the body is prevented, thereby preventing echoes.

## Patentansprüche

1. Eine tragbare Funkvorrichtung, umfassend:
ein Gehäuse, das eine Abdeckung (11) und ein Behältnis (12) einschließt;
eine Leiterplatine (13), die zwischen der Abdeckung (11) und dem Behältnis (12) bereitgestellt wird;
einen I/O-Stecker (14), der auf der Leiterplatine (13) bereitgestellt wird und zwischen der Abdeckung (11) und dem Behältnis (12) eingefügt ist; **gekennzeichnet durch**
zumindest eine erste Rippe (19), die zumindest auf einer Seite des I/O-Steckers (14), die der Abdeckung (11) zugewandt ist, oder einer Seite des I/O-Steckers, die dem Behältnis (12) zugewandt ist, bereitgestellt wird;
zumindest einen Aussparungsbereich (20), der auf dem Behältnis (12) in einem Bereich entsprechend der ersten Rippe (19) vorgesehen ist, um die erste Rippe (19) aufzunehmen; und
zumindest eine zweite Rippe (19), die zumindest auf einer Seite des I/O-Steckers (14), die dem Behältnis (12) zugewandt ist, oder einer Seite der Abdeckung (11), die einem externen Anschluss (29) des I/O-Steckers (14) zugewandt ist, bereitgestellt wird.

2. Eine tragbare Funkvorrichtung, umfassend:
ein Gehäuse, das eine Abdeckung (11) und ein Behältnis (12) einschließt;
einen Empfänger, der in dem Gehäuse bereitgestellt wird;
einen Batteriehaken (26), der in dem Behältnis (12) bereitgestellt wird, um Batterien zu fixieren; **gekennzeichnet durch**
eine Rippe (28), die auf einem Teil des Behältnisses (12) auf einer Empfängerseite des Batteriehakens (26) vorgesehen ist und sich zu einem Abdeckrahmen (27) erstreckt, so dass die Rippe zwischen dem Empfänger und dem Batteriehaken angeordnet ist, so dass verhindert wird, dass empfangene Töne von einem Empfänger kommen und über einen Raum in dem Gehäuse einen Sender erreichen, wodurch Echos verhindert werden.

## Revendications

1. Appareil radio portable comprenant :
un corps comprenant un capot (11) et un boîtier (12),
une carte à circuit imprimé (13) prévue entre le capot (11) et le boîtier (12),
un connecteur E/S (14) disposé sur la carte à circuit imprimé (13) et pris en sandwich entre le capot (11) et le boîtier (12), **caractérisé par**
au moins une première nervure (19) prévue sur au moins l'un d'un côté du connecteur E/S (14) opposé au capot (11) et d'un côté du connecteur E/S orienté vers le boîtier (12),
au moins une partie d'évidement (20) ménagée sur le boîtier (12) au niveau d'une partie correspondant à la première nervure (19) de manière à recevoir la première nervure (19), et
au moins une seconde nervure (22, 23) prévue sur au moins l'un d'un côté du connecteur E/S (14) opposé au boîtier (12) et d'un côté du capot (11) opposé à une borne externe (29) du connecteur E/S (14).

2. Appareil radio portable comprenant :
un corps comprenant un capot (11) et un boîtier (12),
un récepteur prévu dans le corps,
un crochet pour batterie (26) prévu dans le boîtier (12) pour verrouiller des batteries (18) **caractérisé par**
une nervure (28) prévue sur une partie du boîtier (12) au niveau d'un côté récepteur du crochet pour batterie (26) et s'étendant vers une enceinte blindée (27) de sorte que la nervure est agencée entre le récepteur et le crochet pour batterie de telle sorte que les sons reçus provenant d'un récepteur et atteignant un émetteur par l'intermédiaire d'un espace dans le corps sont empêchés, en empêchant de cette manière des échos.
